# EUROPEAN PATENT APPLICATION

(11) **EP 3 023 484 A1**
(43) Date of publication of application: **25.05.2016**
(21) Application number: 15194958.3
(22) Date of filing: 18.08.2010
(51) Int. Cl.: C12C 5/02, C12G 1/00, C12G 3/04, A23L 29/269

(54) **ALCOHOLIC LIQUID COMPOSITION WITH SUSPENDING PARTICLES**

(62) Divisional of application: 10751855.7
(71) Applicant: Pernod-Ricard, 75116 Paris (FR)
(72) Inventor: LELEU, MARTINE, 91310 LONGPONT SUR ORGE (FR); DOYLE, DAVID, N9B 3K6 WINDSOR ONTARIO (CA)
(74) Representative: Agasse, Stéphane

(57) **Abstract**

The present invention relates to a method for suspending particles in alcoholic liquid composition wherein low acyl gellan gum is used and to a alcoholic beverage having such suspended particles.

## Description

This invention generally relates to a method of suspending particles into an alcoholic beverage and to said alcoholic beverage having suspended particles.

It is known to include particles into a drink in order to enhance its visual attractiveness to the customer. Such particles can be beads, fruit pulp, gold flakes, for example.

Recent release by the Merck Company under the name candurin ® of a new food grade pigment providing sparkling visual effect, allows for a wider range of particles able to give drinks eye-catching and distinctive looks.

More precisely, candurin ® is a food grade pigment based on titanium dioxide (European code E171) and / or iron oxides (E172) coated around a natural and inert carrier made of potassium aluminium silicate (E555, mica). These pigments allow for making affordable silver like or gold like particles that can be introduced into beverages.

Such particles are more visually attractive if they are suspended in an homogeneous way throughout the beverage and do not sediment at the bottom of a bottle nor float to the top. This is especially important when the bottle is resting on a shelf or table. Moreover, it is advantageous if the particles keep suspended without the consumer having to shake the bottle regularly or every time he is going to use the bottle.

Several methods exist in order to keep the added particles into suspension.

First solution may be to adjust the density of the particles to the density of the beverage and balance gravity. However, such a method is very complex to implement and may require adding weighting agents and / or emulsifying the drink. Moreover, this kind of solution is very difficult to control and generally works for one set of conditions that can easily change during the cycle life of the beverage. It is also generally limited to small and lightweight particles.

It is also known to add gold flakes in an effervescent beverage (namely Champagne) in order to have them swirl with the bubbles when the bottle is opened. However, as long as the bottle remains closed, the flakes will tend to sediment and having them distributed throughout the drink will require agitating the bottle.

Another more suitable solution is to use stabilizing agents and more particularly hydrocolloids such as Arabic gum, xanthan gum, pectin, starch or carboxymethylcellulose, for example. However, relatively large quantities of these materials may be required to achieve effective stabilisation. A major drawback of these materials is that they generally will affect beverage flavour and feel.

It is indeed paramount that when using a suspending additive, the thickness, taste, and more generally all the organoleptic properties of the original beverage be not noticeably altered. Consumers should keep the same taste and feel in mouth as with the original drink they like.

Additionnally, one of the drawbacks that should be avoided is the forming of gelling points that would stick to the bottle. Thick Wine tears, rivulets, streaks should also be avoided.

To this end, it has been found that gellan gum would be a suitable material to achieve these goals if used properly.

Gellan gum is a fermentation hydrocolloid produced by the microorganism *Sphingomonas elodea* and available from CP KELCO under the name KELCOGEL. It is a biological product that has naturally found applications numerous biological areas such as food, personal care, etc.

Gellan gum is available under the form of a white powder and needs to be hydrated before use. Hydration is generally performed using heat and / or sequestrants which are intended to trap cations, mainly divalent ones, present in the water (use of de-ionized water is preferred, but cations from the gellan powder remain) and that tend to inhibit hydration of the gellan gum.

Regarding the gel formation, gellan gums solutions form gels on cooling and this formation depends on numerous factors in particular on the presence of cations in the solution. However, adding cations is not always necessary. Presence of cations will increase the gel setting temperature and divalent cations such as calcium and magnesium are known to be the most effective.

WO 96/00018 describes the use of gellan gum for various purposes, and in particular, suspending and stabilizing fruit pulp and slightly gel a drink for stabilizing it. Gellan gum is hydrated straight in the drinkable solution using sodium citrate in some cases. Gel is obtained by using calcium lactate when additional cations are needed.

A further and more detailed application is described in WO 96/22700 and WO 97/15200. In those documents, a pre-gel solution using deionized water (slightly acidic) is made up for hydrating the gellan gum before adding a small amount of said pre-gel solution to the liquid drinkable composition. Sodium citrate is used as a buffer and sequestrant in the pre-gel solution. Gel is obtained simply on cooling.

Use of gellan gum has particularly developed in the food industry for making jellies, stabilizing pulp containing fruit drink, stabilizing milk-based beverage and carbonated drinks.

Although the previously cited documents mention alcoholic beverages and give a few examples, it appears that the specific given examples pertain to relatively low alcohol content. It has been found indeed that use of gellan gum in alcoholic solutions was difficult and presents numerous problems.

More precisely, it has been noticed that following common prior art recipes using gellan gum with alcoholic solutions would lead to cloudy solution and / or insufficient suspension time and / or increased viscosity.

It must indeed be noted that high alcohol containing drink, such as liquors or distillates (vodka, whiskey, ...) are clear solutions and, as mentioned before, adding gellan gum and particles should not modify the clear aspect of the original solution nor its viscosity and mouthfeel.

Main reason may be that alcohol tends to precipitate gellan gum from solution and that only moderate levels are tolerated.

High level of sugar in the beverage and especially in liquor may also affect the gelling properties.

It is also important to note that gellan gum is highly sensitive to cations in the solution.

Moreover, storage and consumption time of alcoholic beverages may reach up to two years and it is thus important that the particles remain suspended for a sufficient time.

The present invention aims at providing such an alcoholic beverage having stabilized suspended particles and a method to prepare such a beverage.

To this end, the present invention relates to a method for suspending particles in alcoholic liquid composition wherein low acyl gellan gum is used.

It has been surprisingly found indeed that low acyl gellan gum showed satisfactory behaviour in high alcohol containing solution. This allowed for the selection of low acyl gellan gum in preparing a liquid alcoholic beverage while use of high acyl gellan gum will yield to poor results showing turbidity, cloudiness and poor stability. This was particularly surprising since high acyl gellan gum is known to show better compatibility with alcohol.

It is important to note that by liquid alcoholic composition, it is to be understood that the viscosity of the final beverage is not noticeably affected and that final viscosity is very close to the viscosity of the original beverage sold without particles. Thus, highly viscous, visually partially or totally gelled product is not considered to be liquid alcoholic composition.

In a preferred method the alcoholic liquid composition is equal to or above 15% vol. It corresponds to the range of spirits.

According to a first implementing way, the alcoholic liquid composition is between 17% vol to 30% vol, more particularly around 25% vol.

According to a second implementing way, the alcoholic liquid composition is between 30% vol to 50% vol, more particularly around 40% vol.

According to a preferred embodiment, the alcoholic liquid composition is a liquor. A liquor is a spirit drink having more than 100 g.l⁻¹ sugar content and is obtained by aromatising, naturally or artificially, ethanol produced by distilling fermented grain, fruit or vegetables. It excludes beer, wine or cider.

According to another preferred embodiment, the alcoholic liquid composition is based on a grain distillate such as whiskey or vodka for example.

Of course, other types of aclohoc, such as cane spirit or Rum, for example, may be used.

Preferably, the amount of gellan gum is up to 0,5 g.l⁻¹ of the final liquid composition. Most preferably, the amount of gellan gum is comprised between 0,15 to 0,4 g.l⁻¹.

Additionally, the method comprises adding a sequestrant. Preferably, the sequestrant is chosen among salts of monovalent ions, preferably sodium and / or potassium, most preferably sodium.

In an advantageous way, the sequestrant is also used at least partially as a gelling agent. This means that the sequestrant will be added in an amount higher to the required amount as a sequestrant.

Preferably, the sequestrant is a citrate. Most preferably, sequestrant is sodium citrate.

It is important to note that other sequestrants may be used, such as potassium citrate, sodium hexametaphosphate, sodium tripolyphosphate, for example, however, sodium citrate is known for not noticeably affecting the organoleptic properties of the product.

According to a preferred implementation, the amount of sodium citrate is at least equal or higher than 1.5 times the amount of gellan gum, and preferably up to 100 times the amount of gellan gum, preferably up to 67 times the amount of gellan gum.

According to a first way of implementation, the amount of sodium citrate is about 50 times the amount of gellan gum.

According to a second way of implementation,, the amount of sodium citrate is between 10 to 15 times the amount of gellan gum.

Additionally, in particular if required only, the method comprises adding a gelling agent, particularly when alcohol content of the final composition is higher than 30% vol. Preferably, the gelling agent is calcium lactate.

Preferably, calcium lactate is added in an amount lower than the amount of gellan gum, preferably lower than 0.75 times the amount of gellan gum, preferably lower than 0.5 times the amount of gellan gum.

In a preferred embodiment, the sequestrant is used as gelling agent without adding other gelling agent, particularly when alcohol content of the final composition is below 30% vol.

It has been indeed surprisingly found that contrary to main recommendations, using divalent cations for gelling the gellan gum was prejudicial, leading to poor solution, insufficient suspending time of the particles, formation of gelling point, wine tears with lumps and other drawbacks. It has thus been surprisingly found that while cations were required for gelling gellan in an alcoholic containing solution, monovalent ions were much more efficient and had a paramount role in gelling the gellan in addition to their role as sequestrants.

Without being bound by any theory, it is believed that divalent ions are usually preferred for gelling the gum because they tend to crosslink the polymeric chains, while monovalent ions can not crosslink the chains. Due to the poor compatibility of gellan gum with alcohol, and the necessity to keep the organoleptics properties, it is essential to form a gel having a very large gel matrix. It appears that when using calcium, the gel matrix may be too tight due to the crosslinking and that consequently, the polymeric chain may tend to gather and form gelling point, or locally viscous droplets.

However, for high alcohol containing solution, and because of the poor compatibility of gellan gum with alcohol tending to precipitate said gellan gum, it may be necessary to strengthen the gel matrix using small amount of calcium cations that will help forming a stronger help while keeping it loose enough to meet the above mentioned requirements.

According to an advantageous way of implementation, the method comprises the step of making a pre-gel solution for hydrating the gellan gum in water, preferably deionised or demineralised, together with the sequestrant before mixing with a complementary alcoholic composition to form the final alcoholic liquid composition.

Preferably, the pre-gel solution is made with at least 40% vol of the final water content of the alcoholic liquid composition.

Preferably again, hydrating the gellan gum in the pre-gel solution is performed under vigourous mix, at least 170 rpm or equivalent for example by using a shear pump.

Additionally, sugar, preferably saccharose or fructose, especially High Fructose Corn Syrup (refered to as HFCS 55) for example, may be added to the pre-gel solution, preferably in an amount up to 250 g.l⁻¹ of the final liquid composition.

According to a first embodiment, the pre-gel solution is, after mixing and hydrating the gellan gum, maintained at a temperature higher than the setting point of the gellan gum until mixing with the complementary alcoholic composition, preferably a temperature between 65 and 68°C.

According to a second embodiment, the pre-gel solution is, after mixing and hydrating the gellan gum, cooled under the setting point of the gellan gum, preferably below 30°C, most preferably around 25°C.

Preferably, shear is maintained in the pre-gel solution until mixing with the complementary liquid composition.

It is important to note that alternately, total sugar content may be added to the complementary solution only. Depending on the heating of the pre-gel solution, sugar may become brown and colour the pre-gel solution.

Additionally, the complementary liquid composition comprises flavour, and / or citric acid, preferably in an amount up to 2 g.l⁻¹, and / or sugar, preferably saccharose or HFCS 55 and preferably so as the final total sugar content be up to 250 g.l⁻¹. Levels given may be adjusted as required for taste.

In addition, the pre-gel solution and the complementary liquid solution are mixed under agitation, preferably vigorous mix, preferably at around 170 rpm, preferably with a high speed pump, preferably around 1000 l.h⁻¹ flow rate.

Preferably, the pre-gel solution and the complementary liquid solution are mixed under controlled temperature aiming at a target temperature below setting point of the gellan gum, preferably, below 25°C, most preferably around 20°C.

In complement, the method comprises the step of adding particles to the mix formed by the pre-gel solution and the complementary solution, preferably under slight agitation in order to ensure proper homogenisation.

Preferably, and given as non limitative examples, suspended particles can be gold flakes, fruit pieces or fruit pulp, coconut pulp pieces, candurin®, food grade pigments, etc ...

The present invention also relates to an alcoholic liquid composition obtainable with a method according to the invention.

The present invention will be better understood with the following detailed description of preferred embodiments given by way of example.

### Example 1 : Preparation of a solution at 25% vol alcohol (liquor type)

Concentrations of the components are given with regard to the final volume of the solution.

### Components :

- Alcohol : sufficient amount for reaching between 25% vol
- Sugar (saccharose) : from 50 to 250 g.l⁻¹ depending on the final desired composition of the liquor
- Citric Acid : from 0 to 2 g.l⁻¹ depending on the desired final pH of the liquor
- Low Acyl Gellan Gum : 0,2 g.l⁻¹
- Sodium Citrate : from 2 to 3 g.l⁻¹
- Flavours depending on the liquor. Flavours are generally used in small amount and do not sensibly affect the overall cationic charge of the solution
- Demineralized water: sufficient amount for 1l of final solution

### Operating Process :

**In a first recipient,** make a pre-gel solution:
- Dry mix the gellan gum, sugar (all or part, may also not be added at this step but only in the complementary solution) and sodium citrate. dry mix facilitates an homogeneous mix.
- Add cool demineralised water, preferably as much water as possible, and preferably more that 40% of the final water amount of the solution.
- the solution is heated at about 85°C for 5 minutes and the solid products are dissolved under proper vigorous agitation, preferably at around 170 rpm or using a shear pump.
- Add remaining sugar or part of the remaining sugar.
- Temperature of the first recipient is maintained between 65 and 68°C.

**In a second recipient,** make the complementary liquid composition:
- Dissolve the citric acid into water and add the alcohol.
- Temperature is maintained between 21 and 23°C

### Making final solution

- Using a high speed pump having a 1000 l.h⁻¹ flow rate, add the content of second recipient to the content of first recipient keeping agitating vigorously at 170 rpm.
- Add remaining water if necessary.
- Temperature of the solution is kept between 48 and 21°C
- Cool rapidly the whole solution using and thermal exchanger to reach a target temperature of 20°C
- Add the desired particles into the solution under slight agitation for homogeneisation. Sit time may be required.

It is important to note that in this example; the pre-gel solution is maintained above the setting point of the gellan. Thus, the gel sets only when the full solution is prepared and the solution cooled at 20°C. Thus, the amount of water present when the gel sets is maximum and the gellan is hydrated as much as possible.

Agitation speed and pump flow rate are mere indications for a labscale example and may need to be adapted for scale up.

### Example 2 : Preparation of a solution at 40% vol alcohol (grain distillate type such as vodka or whiskey)

Concentrations of the components are given with regard to the final volume of the solution.

For distillates, max sugar content is 50g.l⁻¹ and the beverage is not acidified with citric acid.

### Components :

- Alcohol : sufficient amount for reaching between 40% vol
- Low Acyl Gellan Gum : 0,36 g.l⁻¹
- Sodium Citrate : 0,54 g.l⁻¹
- Sodium Lactate : 0,225 g.l⁻¹ For high alcohol containing solution, addition of calcium cations may be required. However, the amount is kept as low as possible, most of the gelling being done thanks to the sodium cations.
- Flavours depending on the final desired beverage.
- Demineralized water: sufficient amount for 1l of final solution

### Operating Process :

**In a first recipient,** make a pre-gel solution:
- Dry mix the gellan gum and sodium citrate.
- Add cool demineralised water, preferably as much water as possible, and preferably more that 40% of the final water amount of the solution.
- the solution is heated at about 85°C for 5 minutes and the solid products are dissolved under proper agitation, preferably at around 170 rpm.
- Add remaining sugar or part of the remaining sugar.
- Temperature of the first recipient is maintained between 65 and 68°C.

**In a second recipient,** make the complementary liquid composition:
- Dissolve the citric acid into water and add the alcohol.
- Temperature is maintained between 21 and 23°C

### Making final solution

- Using a high speed pump having a 1000 l.h⁻¹ flow rate, add the content of second recipient to the content of first recipient keeping agitating vigorously at 170 rpm.
- Add remaining water if necessary.
- Temperature of the solution is kept between 48 and 21°C
- Cool rapidly the whole solution using and thermal exchanger to reach a target temperature of 20°C
- Add the desired particles into the solution under slight agitation for homogeneisation.
- Sit time may be required.

It is important to note that in this example; the pre-gel solution is maintained above the setting point of the gellan. Thus, the gel sets only when the full solution is prepared and the solution cooled at 20°C. Thus the amount of water present when the gel sets is maximum and the gellan is hydrated as much as possible.

Agitation speed and pump flow rate are mere indications for a labscale example and may need to be adapted for scale up.

### Example 3: Preparation of a solution at 25% vol alcohol (liquor type, larger scale)

In a first recipient, a pre-gel solution, called part A, is prepared:
- Fill tank with room temperature of cool reverse osmosis (deionized) water. 1800 kg water.
- Under agitation, add sodium citrate and mix until dissolved. 30 kg of Sodium citrate (test also made with 40kg sodium citrate).
- Add gellan (Kelcogel F low acyl gellan gum) to the tank while mixing. 0,6 kg of Gellan gum.

The solution should remain clear and no clumps should form.
- Under maintained agitation, gellan gum is hydrated by heating the solution up to 90°C for 3 to 5 minutes.
- After hydration, the solution is cooled down to a target temperature of 25°C under maintained shear agitation.

The solution should remain clear.

It is important to note, that in this example the pre-gel solution is cooled below the setting point of the gellan gum. Although, the solution remains fluid, pumpable and not noticeably gelled, the gellan gum has set.

Separately, a complementary liquid composition, called part B, is prepared in a second recipient. To do this, the following ingredients are blended : Water (320 kg), sugar (liquid sucrose 57.9 Brix; 1230,8 kg), alcohol (Neutral Spirit at 96% abv, 705,5 kg), flavours, and citric acid (3,2 kg).

Proper agitation is used in order to ensure homogeneity of the blend.

Final alcoholic liquid composition is prepared by combining part A and part B under vigorous mix. Temperature of the blend is preferably controlled and maintained at a target temperature under 28°C, preferably 20°C. Mainly, temperature is kept under setting temperature of the gellan gum.

Finally, the particles are added and put in suspension under slight agitation. Particles suspend immediately.

It is important to note that depending on the amount of sodium citrate added and its ratio to gellan gum, some sit time may be required up to twelve hours, the higher the ratio the lower the sit time.

### Results

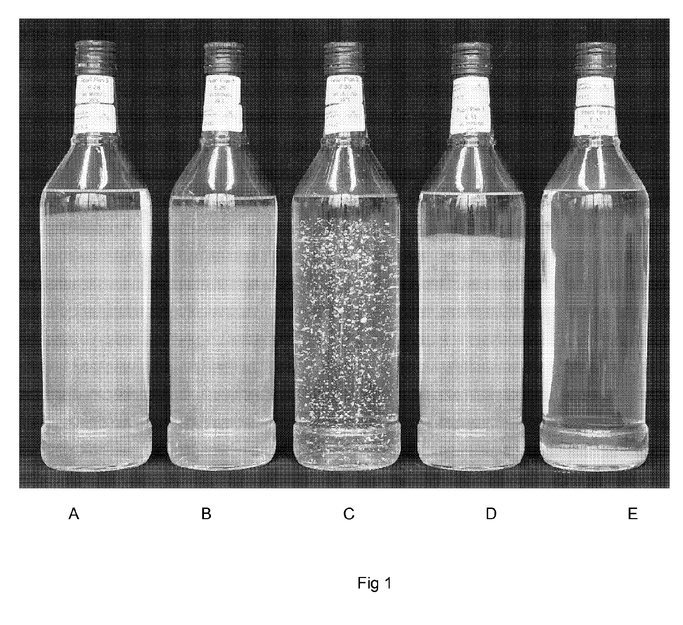

Figure 1 shows some comparative results of particles suspended into a 25% vol. alcohol containing solution.

Main components : 200g/l sugar; 2 g/l citric acid and 0,2 g/l low acyl gellan gum prepared according to example 1.

Bottle A is suspended particles of silver like candurin® using 3 g/l of sodium citrate as sequestrant and gelling agent according to the invention and no falvour added.

Bottle B is suspended particles of silver like candurin® using 3 g/l of sodium citrate as sequestrant and gelling agent and flavour added.

Bottle C is suspended particles of gold using 3 g/l of sodium citrate as sequestrant and gelling agent and flavours added.

Bottle D is suspended particles of silver like candurin® using 2 g/l of sodium citrate as sequestrant and gelling agent and falvours added.

Bottle E is suspended particles of silver like candurin® using 1 g/l of sodium citrate as sequestrant and gelling agent and falvours added.

All five bottles were stored at 35°C for 4,5 months.

First, between experiments A and B, it is to be noted that the presence of falvours did not noticeably affect the performances.

Second, between experiments B and C, it is to be noted that the type of particles did not noticeably affect the performances.

Third, and main point, between experiments B, D and E, it is to be noted that performances are degradated with a lower amount of sodium citrate, and that particles are completely settled at the bottom with an amount of 1g/l sodium citrate, that is to say only 5 times the amount of low acyl gellan gum, while bottle B and D had sodium citrate amounting to respectively, 15 and 10 times the amount of low acyl gellan gum.

Below are results giving decantation height (in percentage of the liquid height) for bottles B, D and E stored at various temperatures.
At 4°C :

| | sodium citrate | | |
|---|---|---|---|
| | 1g/l | 2g/l | 3g/l |
| 1month | 50 | 25 | 1 |
| 2 months | 50 | 25 | 2,5 |
| 4,5months | 50 | 25 | 2,5 |

At 20°C :

| | sodium citrate | | |
|---|---|---|---|
| | 1g/l | 2g/l | 3g/l |
| 1month | 100 | 2,5 | 1 |
| 2 months | 100 | 5 | 2,5 |
| 4,5months | 100 | 5 | 5 |

At 35°C :

| | sodium citrate | | |
|---|---|---|---|
| | 1g/l | 2g/l | 3g/l |
| 1month | 100 | 17,5 | 5 |
| 2 months | 100 | 20 | 7,5 |
| 4,5months | 100 | 20 | 7,5 |

It will thus be seen that the goals set forth above, among those made apparent from the preceding description, are efficiently attained and, since certain changes may be made in carrying out the above method without departing from the spirit and scope of the invention, it is intended that all matter contained in the above description shall be interpreted as illustrative and not in a limiting sense.

It is also understood that the following claims are intended to cover all of the generic and specific features of the invention herein described and all statements of the scope of the invention which, as a matter of language, might be said to fall therebetween.

Particularly it is to be understood that in said claims ingredients or compounds recited in the singular are intended to include compatible mixtures of such ingredients wherever the sense permits.

## Claims

1. An alcoholic liquid composition which is between 15% vol to 30% vol, having particles suspended using low acyl gellan gum, wherein the amount of gellan gum is between 0,15 to 0,4 g.l⁻¹ of the liquid composition, wherein said composition comprises sodium citrate as a sequestrant, and wherein said sodium citrate is present in an amount between 10 to 15 times the amount of gellan gum.

2. An alcoholic liquid composition according to claim 1, wherein the alcohol content is between 17% vol and 30% vol.

3. An alcoholic liquid composition according to claim 1 or 2, wherein the alcohol content is between 25% vol and 30% vol.

4. An alcoholic liquid composition according to any one of claims 1 to 3, wherein the alcoholic liquid composition is a liquor.

5. An alcoholic liquid composition according to any one of claims 1 to 4, wherein the particles are chosen amongst gold flakes, fruit pieces, fruit pulp, coconut pulp pieces, candurin® and food grade pigments.

6. An alcoholic liquid composition any one of claims 1 to 5, wherein the composition further comprises flavour and/or citric acid and/or sugar.

7. An alcoholic liquid composition according to claim 6, wherein the sugar is saccharose or HFCS 55.
